# FASCICULE DE BREVET EUROPEEN

(11) **EP 2 297 919 B1**
(45) Date de publication et mention de la délivrance du brevet: **19.11.2014**
(21) Numéro de dépôt: 09784400.5
(22) Date de dépôt: 09.06.2009
(51) Int. Cl.: H04L 29/06, H04L 29/08, B60R 16/02, H04L 29/12, G06F 9/445

(54) **PROCEDE ET BOITIER PASSERELLE DE TELECHARGEMENT D'UN FICHIER**
VERFAHREN, GATEWAY-BOX UND WERKZEUG ZUM HERUNTERLADEN EINER DATEI
METHOD, GATEWAY BOX AND TOOL FOR DOWNLOADING A FILE

(30) Priorité: 26.06.2008 FR 0854248
(43) Date de publication de la demande: 23.03.2011
(73) Titulaire: Peugeot Citroën Automobiles SA, 78140 Vélizy-Villacoublay (FR)
(72) Inventeur: LOPEZ, Thierry, F-78700 Conflans-Ste-Honorine (FR)
(74) Mandataire: Ménès, Catherine
(86) Numéro de dépôt international: PCT/FR2009/051086
(87) Numéro de publication internationale: WO 2010/004150

(56) Documents cités:
- EP-A1- 1 558 002
- WO-A1-2004/043046
- FR-A1- 2 907 237
- US-A- 5 526 489
- DIGI INTERNATIONAL: "Digi Connect WAN GSM Application Guide - Connecting Ethernet Devices via Mobile Terminated Connection" INTERNET CITATION 18 juillet 2005 (2005-07-18), pages 1-3, XP002512474 Extrait de l'Internet: URL:http://www.bb-elec.com/tech_articles/d igi/appguide_connectwangsm_mobi letermdevice.pdf [extrait le 2009-01-29]

## Description

La présente invention revendique la priorité de la demande française 0854248 déposée le 26 juin 2008 dont le contenu (texte, dessins et revendications) est ici référencé.

L'invention concerne un procédé, un boîtier passerelle et un outil de téléchargement d'un même fichier simultanément dans plusieurs calculateurs.

L'invention concerne plus particulièrement le téléchargement d'un tel fichier dans des calculateurs appartenant à une même famille et qui sont ensuite montés sur plusieurs véhicules automobiles distincts au moment de leur assemblage sur la chaine de production.

Dans la suite de cette description, lorsque le fichier à télécharger contient des instructions ou le code exécutable d'un logiciel, on parle également de téléchargement d'un logiciel.

On connaît déjà dans l'état de la technique des procédés et des systèmes de téléchargement de fichiers dans des calculateurs embarqués à bord de véhicules automobiles, tels que ceux décrits par exemple dans le document FR-A-2719924. Ce document détaille les différentes étapes successives de la procédure utilisée lors de l'assemblage des véhicules ou dans le réseau après-vente d'un constructeur, lors de la correction d'une prestation par échange de fichier.

Cette fonction de téléchargement a été optimisée par la suite afin de la rendre compatible avec des exigences du flux de fabrication des véhicules, dans lequel le téléchargement d'un ensemble de calculateurs d'un même véhicule est réalisé simultanément. On pourra par exemple se reporter au document FR-A-2825813 qui décrit cette optimisation.

Cependant, l'accueil de nouvelles fonctionnalités embarquées et de règlements toujours plus complexes poussent à des tailles mémoires embarquées et des besoins en temps de téléchargement de ces mémoires de plus en plus grands.

Chez certains constructeurs, cette opération est effectuée en bout de chaine de production, juste avant que le véhicule ne quitte la chaine par ses propres moyens, conduisant ainsi à ne pas toujours permettre le téléchargement de l'ensemble des données de tous les calculateurs (on ne télécharge aujourd'hui que la partie calibration des calculateurs de contrôle moteur) car l'extension du flux principal de production d'une usine entraîne des coûts d'investissement importants en terme d'infrastructure.

Bien que la partie calibration d'un logiciel comporte généralement les éléments d'adaptation du logiciel et de personnalisation à un véhicule donné, le besoin du téléchargement de l'ensemble des données d'un calculateur reste pourtant nécessaire lorsqu'une correction de prestation implique la modification d'une stratégie codée.

Lorsque le logiciel complet n'est pas téléchargé dans le flux, pendant tout le temps nécessaire au fournisseur pour livrer de nouvelles pièces, les véhicules continuent d'être assemblés avec la définition du produit antérieure. Cela conduit pour ces véhicules à devoir les rappeler et à en corriger la définition en après-vente (on dispose de la possibilité de télécharger le logiciel complet en après-vente où les contraintes de temps sont moins importantes).

Pour résoudre ce problème, certains constructeurs sont en cours de mise en oeuvre dans chaque usine d'un plateau ou zone dit de "réactivité". Il s'agit de permettre de télécharger un logiciel au moment de la livraison des calculateurs par le fournisseur juste avant d'introduire ces calculateurs en magasin d'où ils sont ensuite acheminés dans la chaine de production des véhicules.

Ce plateau ou zone de réactivité impose donc de disposer d'outils industriels de téléchargement supplémentaires dont le nombre doit être suffisant pour ne pas interrompre la chaine de production pendant la correction en cours.

On a résumé ci-après les exigences associées à la fois au téléchargement dans une chaine de production des véhicules et en zone de réactivité lors de la correction d'un logiciel pour comprendre en quoi celles-ci diffèrent.

Dans une chaîne de production de véhicules, on dispose rarement de deux véhicules identiques enlignés à la suite. Les véhicules se succèdent en effet avec par exemple des motorisations différentes, des options différentes, ...

En fait, les véhicules sont enlignés en fonction des commandes passées par les clients et il faut donc télécharger un ensemble de logiciels différents lors du passage de chaque véhicule devant le poste de l'outil de téléchargement.

Le document FR-A-2825813 mentionné précédemment décrit un procédé et un système particulièrement adaptés à cette situation.

En zone de réactivité, la situation est toute autre, car on souhaite mettre à jour un même logiciel dans plusieurs calculateurs de même type qui viennent d'être livrés. Dans l'état actuel de la technique, pour réaliser cette opération, un opérateur doit connecter un outil de téléchargement sur un calculateur au moyen d'un faisceau adapté et lancer l'opération de mise à jour du logiciel. Une telle opération doit être répétée autant de fois qu'il existe de calculateurs à corriger.

La procédure de téléchargement, bien qu'optimisée pour le téléchargement de chaque calculateur de façon unitaire, ne l'est pas du tout d'un point de vue global. En effet, si l'on doit reprendre mille calculateurs pour en corriger le logiciel, l'opérateur est obligé de lancer mille fois l'opération.

Le temps pris alors pour réaliser ces mille opérations ne doit pas permettre d'interrompre la chaine de production. Lorsque le calculateur est corrigé, celui-ci est ensuite transmis vers la chaine de production. Ceci conduit donc à mettre en place un nombre d'outils suffisant pour toujours disposer du nombre de calculateurs corrigés suffisant à assurer l'encours.

De plus, il existe plusieurs difficultés supplémentaires comme le fait que le véhicule ne soit pas assemblé, que l'ensemble des calculateurs du véhicule ne soit pas accessible à un outil de diagnostic depuis la prise centralisée du véhicule, et surtout qu'il y ait un encours à assurer, compliquent la tâche et oblige à proposer un procédé adapté.

Les difficultés décrites ci-dessus peuvent se rencontrer non seulement lors du téléchargement d'un fichier contenant le code d'un logiciel mais, de façon plus générale, lors du téléchargement de tout type de fichier.

Le but de l'invention est donc de résoudre ces problèmes et de proposer une solution pour le téléchargement, dans des calculateurs, d'un même fichier dont la taille est incompatible avec un téléchargement sur la chaine de production.

Elle a donc pour objet un procédé de téléchargement d'un même fichier simultanément dans plusieurs calculateurs avant leur montage dans des véhicules, dans lequel le procédé comprend :
- la connexion de ces calculateurs à des ports d'entrée/sortie respectifs d'un boîtier passerelle raccordant tous ces calculateurs à un même outil de téléchargement du fichier,
- l'envoi, par l'un des calculateurs, d'une trame d'informations à l'outil de téléchargement contenant un identifiant de calculateur, cet identifiant étant le même pour tous les calculateurs connectés au boîtier passerelle, et
- le remplacement, par le boîtier passerelle, de l'identifiant de calculateur par un identifiant de port propre à identifier de façon unique le port d'entrée/sortie du boîtier passerelle auquel est connecté ce calculateur dans la trame d'informations envoyée à l'outil de téléchargement.

Dans le procédé ci-dessus, puisque la trame d'informations envoyée comporte un identifiant du port d'entrée/sortie auquel est connecté le calculateur, l'outil de téléchargement peut identifier le port sur lequel est connecté ce calculateur. Cela permet donc de distinguer les trames émises par le calculateur connecté à ce port, des trames émises par les calculateurs connectés à d'autres ports d'entrée/sortie. Le téléchargement de fichiers n'a donc pas besoin d'être fait en aveugle puisque les réponses d'un calculateur peuvent être discriminées des réponses des autres calculateurs dans lequel le même fichier est téléchargé en même temps. Il devient alors possible de mettre en oeuvre des fonctionnalités telles que :
- la synchronisation des calculateurs entre eux, ou
- la détection d'anomalies au cours du téléchargement du fichier, ou
- la vérification du bon déroulement du téléchargement du fichier dans chaque calculateur à l'aide du même outil de téléchargement.

De plus, ce procédé ne nécessite aucune modification du protocole de communication entre l'outil de téléchargement et les calculateurs. En effet, seul le contenu du champ de la trame d'informations destiné à contenir l'identifiant de calculateur est remplacé par un identifiant de port d'entrée/sortie. Ainsi, des protocoles standards tels que le protocole CAN (Controller Area Network) peuvent être utilisés pour transmettre les trames au travers du boîtier passerelle.

Selon une variante de l'invention, le procédé comprend de plus l'envoi par l'outil de téléchargement d'une trame d'informations comportant un identifiant d'un port d'entrée/sortie auquel est connecté un calculateur, et le remplacement par le boîtier passerelle, de cet identifiant de port par l'identifiant de calculateur avant de transmettre cette trame au calculateur connecté au seul port d'entrée/sortie correspondant à cet identifiant de port.

Dans une variante, le procédé comprend le déclenchement par l'outil de téléchargement d'un nouveau traitement pour télécharger le fichier, simultanément dans tous les calculateurs, dès que tous ces calculateurs ont envoyé à l'outil de téléchargement une trame d'informations indiquant que le traitement précédemment déclenché s'est correctement terminé.

Dans une variante, le procédé comprend la comparaison d'une liste d'identifiants de ports construite à partir des identifiants de ports contenus dans les trames d'informations indiquant que le traitement précédemment déclenché pour télécharger le fichier s'est correctement terminé, à une liste des identifiants de ports d'entrée/sortie auxquels sont connectés des calculateurs pour identifier les calculateurs dans lesquels le traitement précédent ne s'est pas encore terminé ou ne s'est pas correctement terminé.

Dans une variante, le procédé comprend le déclenchement à nouveau du traitement précédemment déclenché dans tous les calculateurs qui n'ont pas indiqué que le traitement précédemment déclenché s'est correctement terminé.

Dans une variante, les trames d'informations sont conformes au protocole CAN (Control Area Network).

Ces modes de réalisation du procédé présentent les avantages suivants. Le remplacement de l'identifiant de port par l'identifiant de calculateur avant la transmission d'une trame au calculateur permet d'adresser une trame d'informations à un calculateur spécifique alors que tous ces calculateurs comportent le même identifiant de calculateur sans qu'il soit nécessaire pour cela de modifier le calculateur ou le protocole de communication avec ce calculateur ;

- le déclenchement du prochain traitement dans les calculateurs dès que des trames indiquant que le traitement précédent est terminé permet de réaliser plus rapidement la succession temporelle des traitements nécessaires pour télécharger le fichier dans ces calculateurs puisqu'il n'est plus nécessaire d'attendre un temps minimum prédéterminé entre deux traitements successifs déclenchés par l'outil de téléchargement ;

- la comparaison de la liste des identifiants de ports reçus à la liste des identifiants de ports auxquels sont connectés des calculateurs permet de détecter les calculateurs qui n'ont pas fini le traitement précédent ce qui permet de suivre le déroulement du téléchargement du fichier dans chacun des calculateurs ;

- le déclenchement à nouveau du traitement précédent lorsqu'un calculateur n'a pas indiqué à l'outil de téléchargement qu'il a correctement terminé le précédent traitement permet de déclencher à nouveau le traitement précédent uniquement si cela est nécessaire.

L'invention a également pour objet un boîtier passerelle de téléchargement d'un même fichier simultanément dans plusieurs calculateurs avant leur montage dans des véhicules, dans lequel ce boîtier passerelle comprend plusieurs premiers ports d'entrée/sortie aptes à être connectés de façon détachable à des calculateurs respectifs, un second port d'entrée/sortie apte à être connecté à un outil de téléchargement du fichier dans tous ces calculateurs, et un contrôleur apte à transmettre une trame d'informations reçue sur l'un des premiers ports d'entrée/sortie vers le second port d'entrée/sortie, la trame d'informations reçue sur le premier port d'entrée/sortie contenant un identifiant de calculateur, cet identifiant de calculateur étant le même pour tous les calculateurs, et ce contrôleur étant apte à remplacer, dans la trame transmise vers le second port d'entrée/sortie, l'identifiant de calculateur par un identifiant de port apte à identifier de façon unique le port d'entrée/sortie du boîtier passerelle par lequel est reçu cette trame d'informations.

Dans une variante, le boitier passerelle comprend un contrôleur apte à remplacer un identifiant de port par l'identifiant de calculateur dans une trame transmise vers l'un des premiers ports d'entrée/sortie.

Dans une variante, le boitier passerelle comprend des moyens de stockage d'information contenant :une première table de substitution dans laquelle chaque premier port d'entrée/sortie est associé à l'identifiant de port destiné à remplacer l'identifiant de calculateur dans une trame transmise vers le second port d'entrée/sortie, et une seconde table de substitution dans laquelle chaque premier port d'entrée/sortie est associé à l'identifiant de port destiné à être remplacé par l'identifiant de calculateur dans une trame d'informations transmise vers un premier port d'entrée/sortie, les identifiants de ports contenus dans les première et seconde tables étant différents pour le même port d'entrée/sortie

Utiliser des identifiants de ports différents selon que la trame d'informations est transmise vers un calculateur ou vers l'outil de téléchargement permet au contrôleur d'identifier à partir de cet identifiant de port si cette trame doit être transmise vers le calculateur ou vers l'outil de téléchargement.

Enfin, l'invention a également pour objet un outil de téléchargement d'un même fichier simultanément dans plusieurs calculateurs avant leur montage sur un véhicule, caractérisé en ce que l'outil de téléchargement est apte à déclencher un nouveau traitement pour télécharger le fichier simultanément dans tous les calculateurs dès que tous ces calculateurs ont envoyé à l'outil de téléchargement une trame d'informations indiquant que le traitement précédemment déclenché s'est correctement terminé.

Dans une variante, l'outil est apte à comparer une liste d'identifiants de ports construite à partir des identifiants de ports contenus dans les trames d'informations indiquant que le traitement précédemment déclenché pour télécharger le fichier s'est correctement terminé, à une liste des identifiants de ports d'entrée/sortie auxquels sont connectés des calculateurs pour identifier les calculateurs dans lesquels le traitement précédent ne s'est pas encore terminé ou ne s'est pas correctement terminé.

Dans une variante, l'outil est apte à déclencher à nouveau le traitement précédemment déclenché dans tous les calculateurs qui n'ont pas indiqué que le traitement précédemment déclenché s'est correctement terminé.

L'invention sera mieux comprise à la lecture de la description qui va suivre, donnée uniquement à titre d'exemple non limitatif et faite en se référant aux dessins sur lesquels :
• - la figure 1 est une illustration schématique de l'architecture d'un système de téléchargement d'un même fichier simultanément dans plusieurs calculateurs ;
• - les figures 2 et 3 sont des illustrations de table de substitution utilisées par le système de la figure 1 ;
• - les figures 4, 5 et 6 sont des organigrammes de procédé d'échange d'informations entre les calculateurs et un outil de téléchargement du système de la figure 1,
• - la figure 7 est un organigramme d'un procédé de téléchargement d'un même fichier simultanément dans plusieurs calculateurs à l'aide du système de la figure 1, et
• - la figure 8 est un organigramme du détail d'une étape du procédé de la figure 7.

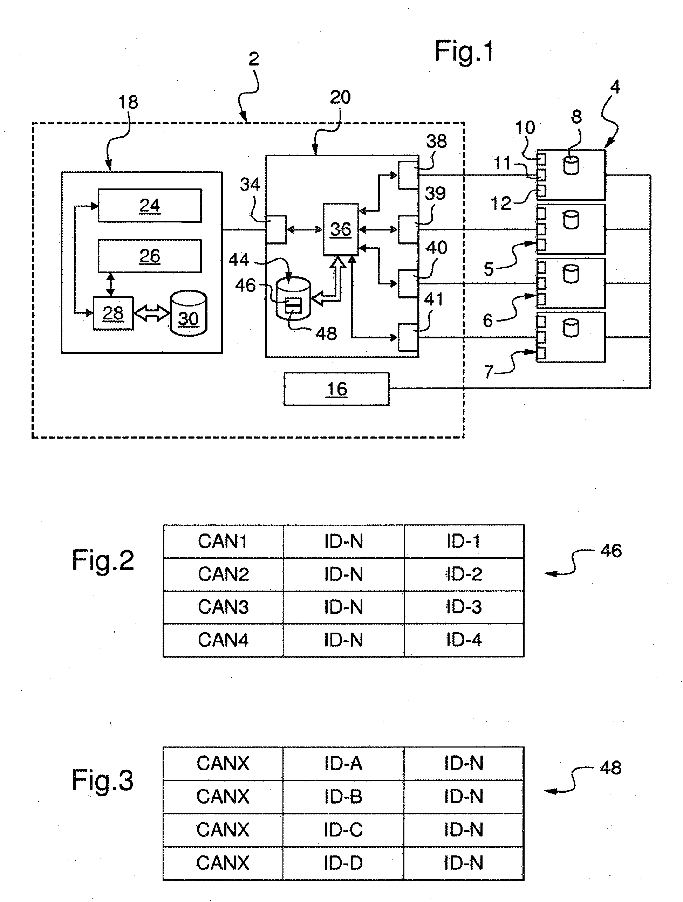

La figure 1 représente un système 2 de téléchargement d'un même fichier simultanément dans plusieurs calculateurs.

Par exemple, le fichier est un fichier contenant le code exécutable d'un logiciel. Ce code exécutable contient des instructions exécutables par les calculateurs dans lequel ce fichier est téléchargé.

Les calculateurs dans lesquels le fichier doit être téléchargé sont des calculateurs destinés à être montés dans un véhicule tel qu'un véhicule automobile. Ici, le véhicule automobile est une voiture.

Ces calculateurs sont tous identiques ou en tout état de cause du même type. Par exemple, ces calculateurs peuvent être des calculateurs de contrôle moteur, des calculateurs de boîte de vitesses, des calculateurs d'ABS (Antiblock Breaking System), des calculateurs de suspensions ou des calculateurs d'habitacle.

Pour simplifier la figure 1, seuls quatre calculateurs 4 à 7 sont représentés. Par exemple, les calculateurs 4 à 7 sont des calculateurs de contrôle moteur.

Tous ces calculateurs sont ici strictement identiques et seul le calculateur 4 sera décrit en détail.

Le calculateur 4 comprend une mémoire 8 non volatile réinscriptible. Par exemple, cette mémoire 8 est une mémoire NVRAM (Non Volatil Random Access Memory). A titre d'illustration, il s'agit d'une mémoire connue sous la terminologie de « mémoire flash » ou « flash Eprom ». Cette mémoire 8 contient des fichiers. Ces fichiers peuvent contenir des instructions exécutables par le calculateur 4. Ici, il s'agit d'instructions pour contrôler 1e moteur d'un véhicule.

Le calculateur 4 comporte également plusieurs connecteurs 10 à 12 permettant de raccorder ce calculateur à différents équipements du véhicule dans lequel il est destiné à être monté. En particulier, l'un de ces connecteurs par exemple le connecteur 11 est destiné à être raccordé à un bus CAN. Toutefois, sur la figure 1, ces calculateurs sont dans une zone de réactivité et ne sont donc par conséquent pas assemblés dans un véhicule.

Il est important de noter que puisque ces calculateurs 4 à 7 sont identiques les uns aux autres, chacun de ces calculateurs comporte le même identifiant de calculateur. Cet identifiant de calculateur est notamment utilisé pour identifier ce calculateur sur le réseau de transmission d'informations embarqué dans le véhicule, lorsque celui-ci est assemblé dans le véhicule. Par exemple, le réseau de transmission d'informations est le bus CAN du véhicule.

Le système 2 permet de télécharger le même fichier simultanément dans la mémoire 8 de chacun des calculateurs 4 à 7. A cet effet, le système 2 comprend une alimentation 16 propre à alimenter chacun des calculateurs 4 à 7.

Le système 2 comprend également un outil 18 de téléchargement raccordé à chacun des calculateurs 4 à 7 par l'intermédiaire d'un boîtier passerelle 20.

L'outil 18 est apte à télécharger, en même temps, dans chacune des mémoires 8 des calculateurs 4 à 7 le même fichier. Par exemple, le fichier à télécharger est une mise à jour d'un fichier déjà existant dans la mémoire 8. A cet effet, l'outil 18 comprend une interface home machine composée, par exemple, d'un écran 24 et d'un clavier 26. Ainsi, l'utilisateur de cet outil 18 peut saisir des données et suivre le déroulement du téléchargement du fichier.

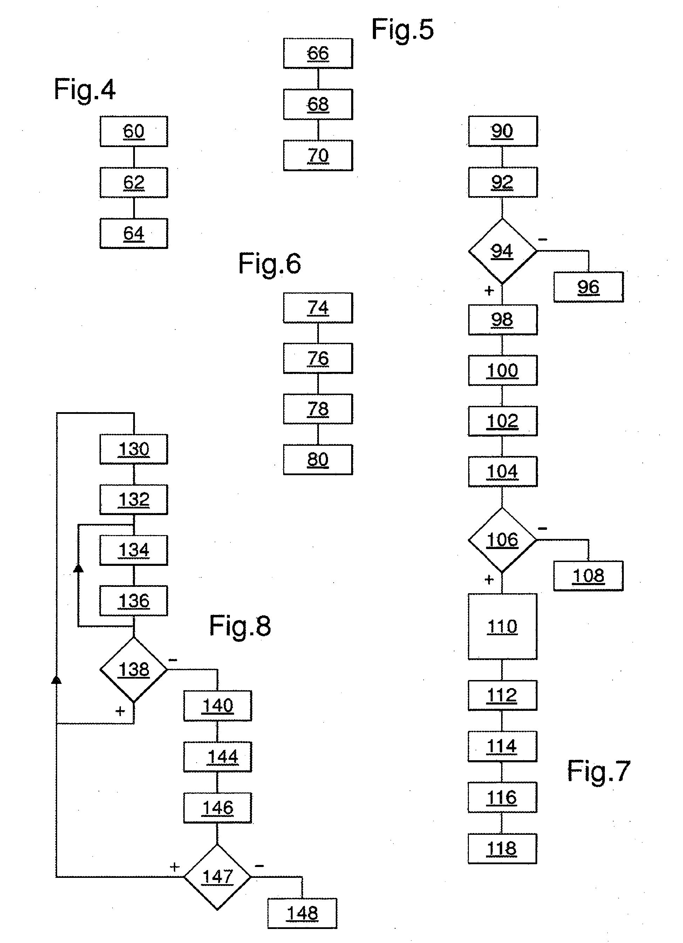

L'outil 18 est réalisé à partir d'un calculateur programmable 28 apte à exécuter des instructions enregistrées dans une mémoire. A cet effet, le calculateur 28 est raccordé à une mémoire 30 contenant des instructions pour l'exécution du procédé de la figure 7.

L'outil 18 est connecté à un port 34 d'entrée/sortie du boîtier passerelle 20.

Le boîtier passerelle 20 permet à l'outil 18 de transmettre des trames d'informations simultanément vers chacun des calculateurs 4 à 7 et de recevoir, en réponse, des trames d'informations envoyées par chacun de ces calculateurs 4 à 7 vers l'outil 18.

A cet effet, le port 34 est raccordé à un contrôleur 36 de bus CAN. Ce contrôleur 36 est raccordé à quatre ports 38 à 41 d'entrée/sortie supplémentaires. Les ports 38 à 41 sont connectés, respectivement, aux calculateurs 4 à 7.

Le contrôleur 36 gère les échanges d'informations entre, d'une part, le port 34 et, d'autre part, les ports 38 à 41. Ces échanges d'informations se font sous la forme d'échanges de trames d'information. Les trames d'informations comprennent des champs destinés à contenir un identifiant de l'émetteur de la trame et/ou un identifiant du destinataire de la trame. Ces trames d'informations sont conformes au standard CAN (Control Area Network).

Le contrôleur 36 est raccordé à une mémoire 44 contenant deux tables 46 et 48 de substitutions d'identifiants. Ces tables 46 et 48 sont soit téléchargées par l'outil 18 dans le boîtier passerelle 20 soit préenregistrées dans la mémoire 44.

Ces tables 46 et 48 sont représentées plus en détail, respectivement, sur les figures 2 et 3.

La table 46 associe à chaque identifiant de calculateur, un identifiant de port qui doit lui être substitué lorsque une trame d'informations est envoyée par le calculateur vers l'outil 18. Plus précisément, la première colonne de cette table 46 comprend des identifiants CAN1, CAN2, CAN3 et CAN4 correspondant respectivement aux ports d'entrée/sortie 38 à 41. La deuxième colonne de la table 46 comprend l'identifiant de calculateurs utilisé par les calculateurs 4 à 7 dans chaque trame envoyée par ces calculateurs. Ici, cet identifiant noté ID-N est le même pour tous les calculateurs 4 à 7 puisque ces calculateurs sont identiques. Cet identifiant ID-N est apte à identifier de façon unique le calculateur sur le bus du véhicule automobile lorsque ce calculateur est monté dans le véhicule.

Enfin, la dernière colonne associe à chaque identifiant ID-N l'identifiant de port qui doit lui être substitué pour permettre une identification, par l'outil 18, du calculateur ayant émis cette trame d'informations. Par exemple, cette troisième colonne contient successivement les identifiants ID-1, ID-2, ID-3 et ID-4.

La table 48 contient des identifiants de port qui doivent être utilisés pour s'adresser à un calculateur particulier. La première colonne contient l'identifiant du port 34 noté ici CANX. La deuxième colonne contient successivement les identifiants ID-A, ID-B, ID-C et ID-D correspondant, respectivement, aux ports 38 à 41. Enfin, la troisième colonne de la table 48 contient l'identifiant qui doit se substituer à l'identifiant contenu dans la deuxième colonne lorsque la trame est transmise de l'outil 18 vers l'un des calculateurs 4 à 7. Ici, cette quatrième colonne contient sur chaque ligne le même identifiant, c'est-à-dire l'identifiant ID-N. En effet, les calculateurs 4 à 7 sont uniquement à l'écoute des trames d'information comportant cette identifiant ID-N.

La figure 4 représente un procédé de transmission d'une trame d'informations de l'outil 18 vers tous les calculateurs 4 à 7. Initialement, lors d'une étape 60, l'outil 18 envoie, au boîtier passerelle 20, une trame contenant l'identifiant ID-N pour identifier le destinataire de cette trame.

Lors d'une étape 62, cette trame est dirigée, par le contrôleur 36, simultanément vers l'ensemble des ports 38 à 41. Lors d'une étape 64, les ports 38 à 41 retransmettent la trame reçue, sans la modifier, aux calculateurs 4 à 7. Les calculateurs 4 à 7 traitent cette trame étant donné qu'elle porte l'identifiant ID-N qui leur correspond.

La figure 5 représente un procédé de transmission d'une trame d'information de l'outil 18 vers un seul des calculateurs 4 à 7. A titre d'illustration, ce procédé est décrit dans le cas particulier où l'outil 18 envoie une trame uniquement au calculateur 4.

Initialement, lors d'une étape 66, l'outil 18 envoie, au boîtier passerelle 20, une trame d'informations contenant l'identifiant ID-A pour identifier le destinataire de cette trame. Cette trame est reçue par l'intermédiaire du port 34. Ensuite, lors d'une étape 68, le contrôleur 36 remplace l'identifiant ID-A par l'identifiant ID-N de calculateur et dirige cette trame modifiée uniquement vers le port 38. Lors de l'étape 68, le contrôleur 36 utilise la table 48 pour la substitution de l'identifiant ID-A par l'identifiant ID-N.

Lors d'une étape 70, le calculateur 4 qui est connecté au port 38 reçoit cette trame et la traite étant donné que celle-ci comporte l'identifiant ID-N.

La figure 6 représente un procédé de transmission d'informations d'un calculateur particulier vers l'outil 18. Le procédé de la figure 6 est décrit dans cas particulier où c'est le calculateur 4 qui envoie une trame d'informations à l'outil 18.

Initialement, lors d'une étape 74, le calculateur 4 envoie, vers le port 38, une trame contenant l'identifiant ID-N pour identifier l'émetteur de cette trame. Cette trame est reçue par le contrôleur 36.

Lors d'une étape 76, le contrôleur 36 remplace l'identifiant ID-N contenu dans cette trame par l'identifiant ID-1. A cet effet, le contrôleur utilise la table 46. Ensuite, le contrôleur 36, lors d'une étape 78, transmet cette trame dans lequel l'identifiant ID-N a été remplacé par l'identifiant ID-1 à l'outil 18 par l'intermédiaire du port 34.

Lors d'une étape 80, l'outil 18 reçoit cette trame d'informations et peut identifier par l'intermédiaire de quel port d'entrée/sortie cette trame d'informations a été reçue à partir de l'identifiant ID-1 contenu dans cette trame. Ainsi, l'outil 18 est capable d'identifier le calculateur ayant émis cette trame puisqu'un seul calculateur est ici connecté à un seul port d'entrée/sortie.

Le fonctionnement du système 2 va maintenant être décrit plus en détail au regard du procédé de la figure 7 dans le cas particulier où le fichier à télécharger contient le code exécutable d'un logiciel.

Initialement, lors d'une étape 90, les calculateurs 4 à 7 sont reçus dans la zone de réactivité.

Ensuite, lors d'une étape 92, la référence du logiciel contenu dans leur mémoire 8 est lue. Par exemple, cette référence est indiquée sur une étiquette collée sur le calculateur ou peut être lue à l'aide d'un lecteur électronique connecté au calculateur puisque cette référence est également enregistrée dans la mémoire 8.

Lors d'une étape 94, la référence lue est comparée à la référence du logiciel qui doit être utilisée pour le montage du véhicule. Par exemple, la référence du logiciel qui doit être utilisée pour le montage du véhicule est obtenue à partir de la nomenclature de fabrication du véhicule. Si la référence du logiciel enregistrée dans la mémoire 8 correspond à la référence du logiciel indiqué sur la nomenclature de fabrication, alors aucune mise à jour du logiciel n'est nécessaire et le procédé s'arrête lors d'une étape 96.

Dans le cas contraire, lors d'une étape 98, les calculateurs dont les logiciels doivent être mis à jour, triés et transportés dans la zone de réactivité.

Ensuite, lors d'une étape 100, ces calculateurs sont connectés à l'outil 18 par l'intermédiaire du boîtier passerelle 20.

Lors d'une étape 102, le nombre de calculateurs connectés au boîtier passerelle 20 est alors saisi par un opérateur, par exemple, à l'aide du clavier 26.

Ensuite, lors d'une étape 104, l'outil 18 envoie une requête de début de session de programmation aux calculateurs 4 à 7. Cette requête est adressée simultanément à l'ensemble des calculateurs 4 à 7 conformément au procédé décrit au regard de la figure 4.

Une requête correspond ici à une trame particulière d'informations dont le le contenu est défini par un protocole de communication normalisé tel que par exemple protocole Keyword 2000 et ISO15 765.

En réponse à cette requête, lors d'une étape 106, les différents calculateurs identifient qu'une session de programmation est demandée et vérifient que cette session de programmation est possible. Par exemple, lors de l'étape 106, chaque calculateur vérifie s'il est monté dans un véhicule automobile en train de rouler. Dans l'affirmative, le calculateur interdit la session de programmation lors d'une étape 108 et le procédé s'arrête.

L'étape 106 permet d'empêcher la programmation des calculateurs lorsque, par exemple, le véhicule automobile dans lequel ils sont implantés est en cours d'utilisation.

Dans le cas contraire, lors d'une étape 110, l'outil 18 télécharge dans la mémoire 8 de chacun des calculateurs le fichier contenant le code exécutable de la nouvelle version du logiciel à implémenter dans ces calculateurs. Par exemple, le téléchargement consiste à déclencher successivement les traitements suivants dans chacun des calculateurs :
• - l'identification du produit ;
• - le déverrouillage de l'accès à la mémoire 8 ;
• - l'effacement de la mémoire 8 de la précédente version du logiciel à télécharger ;
• - l'écriture dans la mémoire 8 des données correspondant à la nouvelle version du logiciel ;
• - l'autocontrôle de l'intégrité du nouveau code enregistré dans la mémoire 8 ; et
• - l'écriture dans une zone d'identification de la nouvelle référence du logiciel téléchargé.

Pour déclencher chacun de ces traitements, l'outil 18 envoie simultanément à chacun des calculateurs une requête de déclenchement du traitement. En réponse à cette requête de déclenchement, chaque calculateur effectue le traitement demandé. A la fin de chaque traitement demandé, chaque calculateur envoie une réponse à l'outil 18 sous la forme d'une trame particulière d'informations pour lui indiquer que le traitement demandé s'est correctement terminé.

Cette étape 110 est décrite plus en détail au regard de la figure 8.

A l'issue de l'étape 110, lors d'une étape 112, l'outil 18 relie dans la zone d'identification de chacun des calculateurs la référence du logiciel contenue dans sa mémoire. Lors de l'étape 112, la référence du logiciel inscrite dans la zone d'identification est envoyée par chacun des calculateurs en utilisant le procédé de la figure 6.

Ensuite, lors d'une étape 114, l'outil 18 compare la référence lue dans la mémoire de chacun des calculateurs à la référence de logiciel attendue à partir de la nomenclature de fabrication du véhicule. L'outil 18 est capable d'identifier le calculateur qui, éventuellement, ne comporte pas la bonne référence puisque le procédé de la figure 6 est utilisé par les calculateurs lors de l'étape 112.

Si ces références correspondent, lors d'une étape 116, les calculateurs sont mis hors tension puis déconnectés, lors d'une étape 118, du boîtier passerelle 20. Les boîtiers ainsi correctement reprogrammés sont alors envoyés dans une zone de stockage avant d'être assemblés dans un véhicule automobile.

Si lors de l'étape 114, la référence de logiciel lue ne correspond pas à celle indiquée dans la nomenclature de fabrication, alors le calculateur peut être soit mis au rebut soit reprogrammé à nouveau.

La figure 8 représente plus en détail un exemple possible d'implémentation de l'étape 110 du procédé de la figure 7.

Lors d'une étape 130, l'outil 18 envoie à chacun des calculateurs 4 à 7 une requête permettant de déclencher l'un des traitements à effectuer lors de l'étape 110. Cette requête est dirigée vers chacun des calculateurs en utilisant le procédé décrit en regard de la figure 4.

En réponse, lors d'une étape 132, chacun des calculateurs 4 à 7 commence à exécuter en parallèle le traitement demandé par l'outil 18.

Eventuellement, si le traitement demandé est particulièrement long, lors d'une étape 134, l'outil 18 envoie, en cours d'exécution du traitement par les calculateurs, une requête d'interrogation sur l'état d'exécution du traitement demandé à tous les calculateurs. Cette requête est transmise conformément au procédé de la figure 4. En réponse, chacun des calculateurs, lors d'une étape 136, indique si le traitement demandé est en cours d'exécution ou si au contraire, le traitement demandé s'est correctement terminé. Lors de l'étape 136, la réponse de chacun des calculateurs est transmise à l'outil 18 conformément au procédé de la figure 6. Les étapes 134 à 136 sont réitérées, par exemple, à intervalle régulier. L'intervalle régulier est par exemple égal à 250 millisecondes. Ainsi, la réitération des étapes 134 à 136 permet à l'outil 18 de suivre très précisément le déroulement du traitement demandé.

Lorsqu'un calculateur a fini d'exécuter le traitement demandé, il envoie une trame d'informations pour le signaler à l'outil 18. La transmission de cette trame est réalisée conformément au procédé de la figure 6.

Ensuite, lors d'une étape 138, l'outil 18 vérifie s'il a reçu autant de trames d'informations lui indiquant que le traitement s'est correctement terminé qu'il y a de calculateurs connectés au boîtier passerelle 20. Dans l'affirmative, il retourne à l'étape 130 pour déclencher immédiatement le traitement suivant.

Dans la négative, lors d'une étape 140, l'outil 18 identifie le ou les calculateurs qui n'ont pas répondu que le traitement demandé s'était terminé correctement. Par exemple, lors de l'étape 140, l'outil 18 établit une liste des calculateurs ayant répondu qu'ils ont correctement terminé le traitement demandé à partir des identifiants de port contenus dans les trames envoyées lors de l'étape 136. Ensuite, cette liste est comparée à la liste des identifiants de port auxquels sont actuellement connectés des calculateurs à programmer. La différence entre ces deux listes permet à l'outil 18 d'identifier les ports d'entrée/sortie sur lesquels sont connectés des calculateurs qui n'ont pas terminé correctement le traitement demandé.

Ensuite, pour chaque calculateur qui n'a pas terminé correctement le traitement demandé, on procède à une ou plusieurs tentatives de ré-exécution du traitement demandé. Par exemple, le nombre de tentative est limité à trois par calculateur.

Plus précisément, lors d'une étape 144, l'outil 18 envoie une requête propre à déclencher à nouveau ce traitement dans le calculateur qui n'a pas correctement terminé le traitement demandé. Lors de l'étape 144, c'est le procédé de communication de la figure 5 qui est mis en oeuvre. Ainsi, cette requête est uniquement transmise à ce calculateur.

Ensuite, lors d'une étape 146, en réponse à cette requête, le calculateur concerné exécute de nouveau le traitement demandé. Cette nouvelle exécution se déroule essentiellement comme décrit en regard des étapes 130 à 136.

A l'issue de la nouvelle itération du traitement demandé, lors d'une étape 147, l'outil 18 vérifie s'il a reçu une trame d'informations adressée par ce calculateur lui indiquant que le traitement demandé a correctement été terminé cette fois-ci. Dans l'affirmative, le procédé retourne à l'étape 130. Dans la négative, après avoir effectué plusieurs tentatives, lors d'une étape 148, ce calculateur est considéré comme défaillant et n'est plus pris en compte pour la suite des opérations. Par exemple, lors de l'étape 148, une erreur concernant ce calculateur est affichée par l'intermédiaire de l'écran 24.

De nombreux autres modes de réalisation sont possibles. Par exemple, l'alimentation n'est pas nécessairement distincte du boîtier passerelle 20. En variante, l'alimentation et les communications entre ce boîtier passerelle et les calculateurs se font par l'intermédiaire du même faisceau de câbles.

Le nombre de calculateurs connectés au boîtier passerelle peut être quelconque. En particulier, ce nombre de calculateurs peut être très élevé et très supérieur à huit ou vingt.

Lors de l'étape 110, dans les traitements demandés, l'un des traitements peut consister en un mécanisme d'authentification des calculateurs. Ce mécanisme d'authentification met par exemple en oeuvre un échange de clefs cryptographiques.

Il n'est pas nécessaire que tous les calculateurs connectés au boîtier passerelle 20 soient strictement identiques. En effet, des calculateurs ayant les mêmes fonctions mais produits par des fournisseurs différents peuvent légèrement différer les uns des autres tout en comportant en mémoire des fichiers strictement identiques. De plus, même si les calculateurs sont produits par des fournisseurs différents, ces calculateurs auront le même identifiant de calculateurs puisque leurs fonctions sont identiques.

## Revendications

1. Procédé de téléchargement d'un même fichier simultanément dans plusieurs calculateurs avant leur montage dans des véhicules, **caractérisé en ce que** ce procédé comprend :
- la connexion (100) de ces calculateurs à des ports d'entrée/sortie respectifs d'un boîtier passerelle raccordant tous ces calculateurs à un même outil de téléchargement du fichier,
- l'envoi (74), par l'un des calculateurs, d'une trame d'informations à l'outil de téléchargement contenant un identifiant de calculateur, cet identifiant étant le même pour tous les calculateurs connectés au boîtier passerelle, et
- le remplacement (76), par le boîtier passerelle, de l'identifiant de calculateur par un identifiant de port propre à identifier de façon unique le port d'entrée/sortie du boîtier passerelle auquel est connecté ce calculateur dans la trame d'informations envoyée à l'outil de téléchargement.

2. Procédé selon la revendication 1, dans lequel le procédé comprend :
- l'envoi (66) par l'outil de téléchargement d'une trame d'informations comportant un identifiant d'un port d'entrée/sortie auquel est connecté un calculateur, et
- le remplacement (68) par le boîtier passerelle, de cet identifiant de port par l'identifiant de calculateur avant de transmettre cette trame au calculateur connecté au seul port d'entrée/sortie correspondant à cet identifiant de port.

3. Procédé selon l'une quelconque des revendications précédentes, dans lequel le procédé comprend le déclenchement (138, 130) par l'outil de téléchargement d'un nouveau traitement pour télécharger le fichier, simultanément dans tous les calculateurs, dès que tous ces calculateurs ont envoyé à l'outil de téléchargement une trame d'informations indiquant que le traitement précédemment déclenché s'est correctement terminé.

4. Procédé selon l'une quelconque des revendications précédentes, dans lequel le procédé comprend la comparaison (140) d'une liste d'identifiants de ports construite à partir des identifiants de ports contenus dans les trames d'informations indiquant que le traitement précédemment déclenché pour télécharger le fichier s'est correctement terminé, à une liste des identifiants de ports d'entrée/sortie auxquels sont connectés des calculateurs pour identifier les calculateurs dans lesquels le traitement précédent ne s'est pas encore terminé ou ne s'est pas correctement terminé.

5. Procédé selon la revendication 4, dans lequel le procédé comprend le déclenchement (144) à nouveau du traitement précédemment déclenché dans tous les calculateurs qui n'ont pas indiqué que le traitement précédemment déclenché s'est correctement terminé.

6. Procédé selon l'une quelconque des revendications précédentes, dans lequel le procédé comprend l'envoie (134), par l'outil de téléchargement, à tous les calculateurs, d'une trame d'informations en réponse à laquelle chaque calculateur doit répondre en indiquant si le traitement déclenché est en cours d'exécution ou correctement terminé.

7. Procédé selon l'une quelconque des revendications précédentes, dans lequel les trames d'informations sont conformes au protocole CAN (Control Area Network).

8. Boîtier passerelle de téléchargement d'un même fichier simultanément dans plusieurs calculateurs avant leur montage dans des véhicules, **caractérisé en ce que** ce boîtier passerelle comprend :
- plusieurs premiers ports d'entrée/sortie (38 à 41) aptes à être connectés de façon détachable à des calculateurs respectifs,
- un second port d'entrée/sortie (34) apte à être connecté à un outil de téléchargement du fichier dans tous ces calculateurs, et
- un contrôleur (36) apte à transmettre une trame d'informations reçue sur l'un des premiers ports d'entrée/sortie vers le second port d'entrée/sortie, la trame d'informations reçue sur le premier port d'entrée/sortie contenant un identifiant de calculateur, cet identifiant de calculateur étant le même pour tous les calculateurs, et ce contrôleur étant apte à remplacer, dans la trame transmise vers le second port d'entrée/sortie, l'identifiant de calculateur par un identifiant de port apte à identifier de façon unique le port d'entrée/sortie du boîtier passerelle par lequel est reçu cette trame d'informations.

9. Boîtier selon la revendication 8, dans lequel le contrôleur (36) est apte à remplacer un identifiant de port par l'identifiant de calculateur dans une trame transmise vers l'un des premiers ports d'entrée/sortie.

10. Boîtier selon la revendication 8 ou la revendication 9, dans lequel le boîtier passerelle comprend des moyens (44) de stockage d'information contenant :
- une première table (46) de substitution dans laquelle chaque premier port d'entrée/sortie est associé à l'identifiant de port destiné à remplacer l'identifiant de calculateur dans une trame transmise vers le second port d'entrée/sortie, et
- une seconde table (48) de substitution dans laquelle chaque premier port d'entrée/sortie est associé à l'identifiant de port destiné à être remplacé par l'identifiant de calculateur dans une trame d'informations transmise vers un premier port d'entrée/sortie, les identifiants de ports contenus dans les première et seconde tables étant différents pour le même port d'entrée/sortie.

## Patentansprüche

1. Verfahren zum Herunterladen einer selben Datei gleichzeitig auf mehrere Rechner vor deren Montage in Fahrzeuge, **dadurch gekennzeichnet, dass** dieses Verfahren folgendes umfasst:
- den Anschluss (100) dieser Rechner an jeweilige Eingangs-/ Ausgangsports eines Gateway-Gehäuses, das alle diese Rechner mit einem selben Gerät zum Herunterladen der Datei verbindet,
- die Versendung (74) eines Informationsblocks durch einen der Rechner an das Herunterladegerät, eine Rechneridentifizierung umfassend, wobei diese Identifizierung für alle Rechner, die mit dem Gateway-Gehäuse verbunden sind, dieselbe ist, und
- den Ersatz (76) der Rechneridentifizierung durch eine eigene Portidentifizierung durch das Gateway-Gehäuse, zur eindeutigen Identifizierung des Eingangs-/ Ausgangsports des Gateway-Gehäuses mit dem dieser Rechner verbunden ist, im Informationsblock, der an das Herunterladegerät gesandt wird.

2. Verfahren nach Anspruch 1, wobei das Verfahren folgendes umfasst:
- die Versendung (66) eines Informationsblocks durch das Herunterladegerät, mit einer Identifizierung des Eingangs-/Ausgangsports, mit dem ein Rechner verbunden ist, und
- den Ersatz (68) dieser Portidentifizierung durch die Rechneridentifizierung durch das Gateway-Gehäuse, vor der Übertragung dieses Blocks an den Rechner, der an den einzigen Eingangs-/Ausgangsport angeschlossen ist, der dieser Portidentifizierung entspricht.

3. Verfahren nach irgendeinem der vorherigen Ansprüche, wobei das Verfahren den Anstoß (138, 130) durch das Herunterladegerät einer neuen Bearbeitung zum Herunterladen der Datei gleichzeitig in alle Rechner umfasst, sobald alle diese Rechner dem Herunterladegerät einen Informationsblock zugesandt haben, der angibt, dass die zuvor angestoßene Bearbeitung korrekt abgeschlossen wurde.

4. Verfahren nach irgendeinem der vorherigen Ansprüche, wobei das Verfahren den Vergleich (140) einer Liste mit Portidentifizierungen, die aus den Portidentifizierungen erstellt wird, die in den Informationsblöcken enthalten sind, welche angeben, dass die zuvor angestoßene Bearbeitung zum Herunterladen der Datei korrekt abgeschlossen wurde, mit einer Liste mit Identifizierungen von Eingangs-/Ausgangsports umfasst, an die Rechner angeschlossen sind, um jene Rechner zu identifizieren, in denen die vorherige Bearbeitung noch nicht abgeschlossen wurde, oder nicht korrekt abgeschlossen wurde.

5. Verfahren nach Anspruch 4, wobei das Verfahren den erneuten Anstoß (144) der zuvor angestoßenen Bearbeitungen in allen Rechnern umfasst, die nicht angegeben haben, dass die zuvor angestoßene Bearbeitung korrekt abgeschlossen wurde.

6. Verfahren nach irgendeinem der vorherigen Ansprüche, wobei das Verfahren die Versendung (134) durch das Herunterladegerät eines Informationsblocks als Antwort an alle Rechner umfasst, den jeder Rechner mit der Angabe beantworten muss, ob die angestoßene Bearbeitung noch ausgeführt wird oder korrekt abgeschlossen wurde.

7. Verfahren nach irgendeinem der vorherigen Ansprüche, bei dem die Informationsblöcke dem CAN Protokoll (Control Area Network) entsprechen.

8. Gateway-Gehäuse zum Herunterladen einer selben Datei gleichzeitig auf mehrere Rechner vor deren Montage in Fahrzeuge, **dadurch gekennzeichnet, dass** dieses Gateway-Gehäuse folgendes umfasst:
- mehrere erste Eingangs-/Ausgangsports (38 bis 41), die geeignet sind, abnehmbar an jeweilige Rechner angeschlossen zu werden,
- einen zweiten Eingangs-/Ausgangsport (34), der geeignet ist, an ein Gerät zum Herunterladen der Datei in alle diese Rechner angeschlossen zu werden, und
- eine Steuerung (36) die geeignet ist, einen Informationsblock, der auf einem der ersten Eingangs-/ Ausgangsports empfangen wurde, an den zweiten Eingangs-/ Ausgangsport zu übertragen, wobei der auf dem ersten Eingangs-/Ausgangsport empfangene Informationsblock eine Rechneridentifizierung enthält, wobei diese Rechneridentifizierung dieselbe für alle Rechner ist, und diese Steuerung geeignet ist, die Rechneridentifizierung im Block, der an den zweiten Eingangs-/Ausgangsport übertragen wird, durch eine Portidentifizierung zu ersetzen, die geeignet ist, den Eingangs-/Ausgangsport des Gateway-Gehäuses, von dem dieser Informationsblock empfangen wird, in eindeutiger Form zu identifizieren.

9. Gehäuse nach Anspruch 8, bei dem die Steuerung (36) geeignet ist, eine Portidentifizierung durch eine Rechneridentifizierung in einem Block zu ersetzen, der an einen der ersten Eingangs-/ Ausgangsports übertragen wird.

10. Gehäuse nach Anspruch 8 oder Anspruch 9, wobei das Gateway-Gehäuse Vorrichtungen (44) zum Speichern von Informationen folgenden Inhalts umfasst:
- eine erste Substitutionstabelle (46), in der jeder erste Eingangs-/ Ausgangsport der Portidentifizierung zugordnet wird, die dazu bestimmt ist, die Rechneridentifizierung in einem Block zu ersetzen, der an den zweiten Eingangs-/ Ausgangsport übertragen wird, und
- eine zweite Substitutionstabelle (48), in der jeder erste Eingangs-/Ausgangsport der Portidentifizierung zugordnet wird, die dazu bestimmt ist, durch die Rechneridentifizierung in einem Informationsblock ersetzt zu werden, der an einen ersten Eingangs-/Ausgangsport übertragen wird, wobei die Portidentifizierungen, die in der ersten und der zweiten Tabelle enthalten sind, für denselben Eingangs-/ Ausgangsport unterschiedlich sind.

## Claims

1. Method for downloading the same files simultaneously in several computers before installation thereof in vehicles, **characterised in that** this method comprises:
- the connection (100) of these computers to respective input/output ports of a gateway box connecting all these computers to the same file-downloading tool,
- the sending (74), by one of the computers, of an information frame to the downloading tool containing a computer identifier, this identifier being the same for all the computers connected to the gateway box, and
- the replacement (76), by the gateway box, of the computer identifier with a port identifier able to uniquely identify the input/output port of the gateway box to which this computer is connected in the information frame sent to the downloading tool.

2. Method according to claim 1, in which the method comprises:
- the sending (66) by the downloading tool of an information frame comprising an identifier of an input/output port to which a computer is connected, and
- the replacement (68) by the gateway box of this port identifier with the computer identifier before transmitting this frame to the computer connected to the single input/output port corresponding to this port identifier.

3. Method according to any one of the preceding claims, in which the method comprises the triggering (138, 130) by the downloading tool of a new processing operation for downloading the file, simultaneously into all the computers, as soon as all these computers have sent to the downloading tool an information frame indicating that the processing operation previously triggered has correctly ended.

4. Method according to any one of the preceding claims, in which the method comprises the comparison (140) of a list of port identifiers constructed from port identifiers contained in the information frames indicating that the processing operation previously triggered for downloading the file has correctly ended, with a list of the input/output port identifiers to which computers are connected for identifying the computers in which the previous processing operation has not yet ended or has not ended correctly.

5. Method according to claim 4, in which the method comprises the triggering (144) once again of the processing operation previously triggered in all the computers that have not indicated that the previously triggered processing operation has ended correctly.

6. Method according to any one of the preceding claims, in which the method comprises the sending (134), by the downloading tool, to all the computers, of an information frame in response to which each computer must respond by indicating whether the processing operation triggered is being executed or has correctly ended.

7. Method according to any one of the preceding claims, in which the information frames are in accordance with the CAN (Control Area Network) protocol.

8. Gateway box for downloading the same file simultaneously into several computers before installation thereof in vehicles, **characterised in that** this gateway box comprises:
- several first input/output ports (38 to 41) able to be connected detachably to respective computers,
- a second input/output port (34) able to be connected to a tool for downloading the file into all these computers, and
- a controller (36) able to transmit an information frame received on one of the first input/output ports to the second input/output port, the information frame received on the first input/output port containing a computer identifier, this computer identifier being the same for all the computers, and this controller being able, in the frame transmitted to the second input/output port, to replace the computer identifier with a port identifier able to uniquely identify the input/output port of the gateway box by which this information frame is received.

9. Box according to claim 8, in which the controller (36) is able to replace a port identifier with the computer identifier in a frame transmitted to one of the first input/output ports.

10. Box according to claim 8 or claim 9, in which the gateway box comprises information storage means (44) containing:
- a first substitution table (46) in which each first input/output port is associated with the port identifier intended to replace the computer identifier in a frame transmitted to the second input/output port, and
- a second substitution table (48) in which each first input/output port is associated with the port identifier intended to be replaced by the computer identifier in an information frame transmitted to a first input/output port, the port identifiers contained in the first and second tables being different for the same input/output port.
